# EUROPÄISCHE PATENTANMELDUNG

(11) **EP 1 308 231 A2**
(43) Veröffentlichungstag der Anmeldung: **07.05.2003**
(21) Anmeldenummer: 02022483.8
(22) Anmeldetag: 05.10.2002
(51) Int. Cl.: B23B 31/26

(54) **Spannvorrichtung für ein Werkzeug**

(30) Priorität: 30.10.2001 DE 10155333
(71) Anmelder: Röhm GmbH, 89567 Sontheim (DE)
(72) Erfinder: Hangleiter, Eugen Dipl.-Ing.(FH), 89568 Hermaringen (DE)
(74) Vertreter: Hentrich, Swen Dipl.-Phys. Dr.

(57) **Zusammenfassung**

Die Erfindung betrifft eine Spannvorrichtung für ein Werkzeug (2), an dem eine zumindest eine radiale Komponente aufweisende Spannfläche (10) ausgebildet ist, mit einer axial verschieblichen, in der Arbeitsspindel (5) geführten Spannstange (7), durch die in der Arbeitsspindel (5) angeordnete Spannklauen (8) zwischen einer Spannstellung, in der die Spannklauen (8) an der Spannfläche (10) anliegen, und einer Lösestellung verstellbar sind. Die Spannvorrichtung (1) umfaßt weiterhin eine in der Arbeitsspindel (5) angeordnete Haltezange (14), an der sich parallel zu den Spannklauen (8) erstreckende, in radialer Richtung federnde Haltezungen (15) ausgebildet sind mit in der Ruhestellung der Haltezungen (15) der Spannfläche (10) anliegenden Halteflächen (16). Auf der den Haltezungen (15) axial abgewandten Seite der Haltezange (14) sind radial federnde Befestigungssegmente (17) angeordnet, die in eine in der Spindelbohrung (6) der Arbeitsspindel (5) ausgebildete Aufnahme (18) eingreifen.

## Beschreibung

Die Erfindung betrifft eine Spannvorrichtung für ein Werkzeug, Werkstück oder dergl., an dem eine zumindest eine radiale Komponente aufweisende Spannfläche ausgebildet ist, mit einer axial verschieblichen, in der Arbeitsspindel geführten Spannstange, durch die in der Arbeitsspindel angeordnete Spannklauen zwischen einer Spannstellung, in der die Spannklauen an der Spannfläche anliegen, und einer Lösestellung verstellbar sind, und mit einer in der Arbeitsspindel angeordneten Haltezange, an der sich parallel zu den Spannklauen erstreckende, in radialer Richtung federnde Haltezungen ausgebildet sind mit in der Ruhestellung der Haltezungen der Spannfläche anliegenden Halteflächen.

Eine derartige Spannvorrichtung ist aus der DE 299 22 642 U1 bekannt, mit der ein einen Hohlschaft aufweisendes Werkzeug gespannt werden kann, wobei der Hohlschaft in der Hohlschaftaufnahme geneigt verlaufende Spannschrägen als Spannflächen aufweist. Durch die axiale Verstellung der Spannstange können die Spannklauen zum Spannen und Lösen des Werkzeuges verstellt werden, der üblicherweise mittels einer Ladeeinrichtung der Spannvorrichtung zugeführt wird. Um die Zeitdauer für den Wechsel des Werkzeuges zu verkürzen, weist die vorbekannte Spannvorrichtung die Haltezange auf, deren Haltezungen beim Laden des Hohlschaftes aufgrund ihrer federnden Eigenschaft zunächst dem Rand des Hohlschaftes ausweichen können, bis dieser axial weit genug auf die Spannvorrichtung aufgeschoben ist, so daß die Haltezungen an den Spannschrägen zur Anlage kommen und aufgrund ihrer federnden Eigenschaften und der Neigung der Spannflächen eine in axialer Richtung wirkende Einzugskraft erzeugen, mit der der Hohlschaft bereits gehalten wird, bevor durch die erneute Verstellung der Spannstange auch die Spannklauen an den Spannflächen zur Anlage kommen, wodurch erreicht ist, daß der Hohlschaft bereits in seiner Lage provisorisch gesichert ist, bevor die vollständige Spannkraft aufgebracht ist. Die bekannte Spannvorrichtung hat sich aufgrund der vorstehend genannten Vorteile in der Praxis bewährt, wobei jedoch diese Vorteile mit einem relativ hohen Aufwand bei der Fertigung und Montage der Spannvorrichtung erkauft werden müssen, da an der Haltezange ein Ringbund ausgebildet ist, der ein Außengewinde aufweist, mit dem die Haltezange in ein in der Spindelbohrung der Arbeitsspindel ausgebildetes Innengewinde eingeschraubt wird, das nur mit großem Aufwand in der Spindelbohrung gefertigt werden kann.

Der Erfindung liegt daher die Aufgabe zugrunde, eine Spannvorrichtung der eingangs genannten Art so weiterzubilden, daß eine vereinfachte Montage der Haltezange möglich ist.

Diese Aufgabe wird bei einer Spannvorrichtung der eingangs genannten Art dadurch gelöst, daß auf der den Haltezungen axial abgewandten Seite der Haltezange radial federnde Befestigungssegmente angeordnet sind, die in eine in der Spindelbohrung der Arbeitsspindel ausgebildete Aufnahme eingreifen.

Diese Spannvorrichtung bietet den Vorteil, daß eine spezielle Bearbeitung der Arbeitsspindel sowie der Haltezange nicht erforderlich ist, um zwischen diesen eine Gewindeverbindung herstellen zu können; vielmehr werden die radial federnden Befestigungssegmente bereit gestellt, durch die es möglich ist, durch eine reine Steckbewegung in axialer Richtung die erforderliche Verbindung zwischen der Arbeitsspindel und der Haltezange herzustellen. Durch die radial federnden Eigenschaften der Befestigungssegmente treten diese selbsttätig in die Aufnahme ein, so daß diesbezüglich kein zusätzlicher Aufwand erforderlich ist.

Als besonders vorteilhaft für die einfache Ausbildung der an der Haltezange angeordneten Haltenzungen und Befestigungssegmenten hat es sich erwiesen, wenn die Haltezange einen Ringbund aufweist, von dem sich in axial entgegengesetzte Richtungen die Haltezungen und die Befestigungssegmente erstrecken.

Im Hinblick darauf, daß durch eine einfache Steckbewegung die Verbindung zwischen der Haltezange und der Arbeitsspindel hergestellt werden soll, ist es vorteilhaft, wenn die Aufnahme durch eine in Umfangsrichtung in der Spindelbohrung der Arbeitsspindel verlaufende Ringnut gebildet ist. So ist sichergestellt, daß unabhängig von der Winkelausrichtung der Haltezange gegenüber der Arbeitsspindel, also unabhängig von deren Drehlage, die Befestigungssegmente stets in die Aufnahme eintreten können.

An den Befestigungssegmenten sind an deren freien Enden sich radial aufweitende Segmentköpfe ausgebildet, die ein einfaches Eintreten der Befestigungssegmente in die Aufnahme ermöglichen. Darüberhinaus ist dadurch auch die Möglichkeit geschaffen, daß zur Sicherung der Segmentköpfe in der Aufnahme an der Spannstange eine Führungsfläche zur Sicherung der in die Aufnahme eingesetzten Befestigungssegmente ausgebildet ist.

Eine besonders bevorzugte Ausführungsform der Erfindung ist dadurch gekennzeichnet, daß die Zugstange an ihrem freien Ende über eine Gewindeverbindung mit einem Druckstück verbunden ist, das zur Zusammenwirkung mit den zur Spannung eines Hohlschaftkegels mit einer die Spannfläche aufweisenden Hohlschaftaufnahme ausgebildeten Spannklauen vorgesehen ist. Dabei ist besonders vorteilhaft, wenn die Spannklauen mit einem Klauenfuß in eine Spannnut der Arbeitsspindel eingesetzt und wenn in dem Ringbund auf der den Spannklauen zugewandten Seite zur Anlage an den Spannklauen bestimmte elastische Druckstücke angeordnet sind. Durch diese Druckstücke ist eine weitere Vereinfachung des Montagevorganges möglich, da zunächst lediglich die Haltezange in die Spindelbohrung der Arbeitsspindel eingesteckt werden muß und danach die Spannklauen mit ihrem Klauenfuß in die Spannnut der Arbeitsspindel eingesetzt werden können, in der diese sogleich durch das Zusammenwirken mit den elastischen Druckstücken gesichert sind, die die Klauenfüße gegen eine Wandung der Spannnut pressen und so fixieren.

Eine weitere besonders bevorzugte Ausführungsform der Erfindung ist dadurch gekennzeichnet, daß die Spannklauen mit einem Klauenfuß in eine Spannnut der Spannstange eingesetzt und zur Zusammenwirkung mit dem die Spannfläche aufweisenden Spannbund eines Einzugsbolzens eines Steilkegels ausgebildet sind. Der besondere Vorteil der erfindungsgemäßen Haltezange liegt nämlich darin, daß deren Einsatz nicht auf die Verwendung in Verbindung mit einem Hohlschaftkegel beschränkt ist, sondern auch ein Einsatz in Kombination mit einem Steilkegel erfolgen kann, wenn die Spannklauen nicht axial unverschieblich in der Arbeitsspindel gelagert sind, sondern in axialer Richtung zusammen mit der Spannstange verschoben werden können, während die Haltezange unverändert in axialer Richtung gegenüber der Arbeitsspindel festgelegt ist.

Um die Demontage der Haltezange aus der Spindelbohrung der Arbeitsspindel zu erleichtern, ist es vorteilhaft, wenn am Ringbund auf dessen Innenseite ein Abzugsgewinde ausgebildet ist.

Im folgenden wird die Erfindung an in der Zeichnung dargestellten Ausführungsbeispielen näher erläutert; es zeigen:
- Fig. 1: einen Längsschnitt durch das einen Hohlschaftkegel haltende axiale Endung einer Spannvorrichtung, oben in der Spannstellung, unten in der Lösestellung gezeigt,

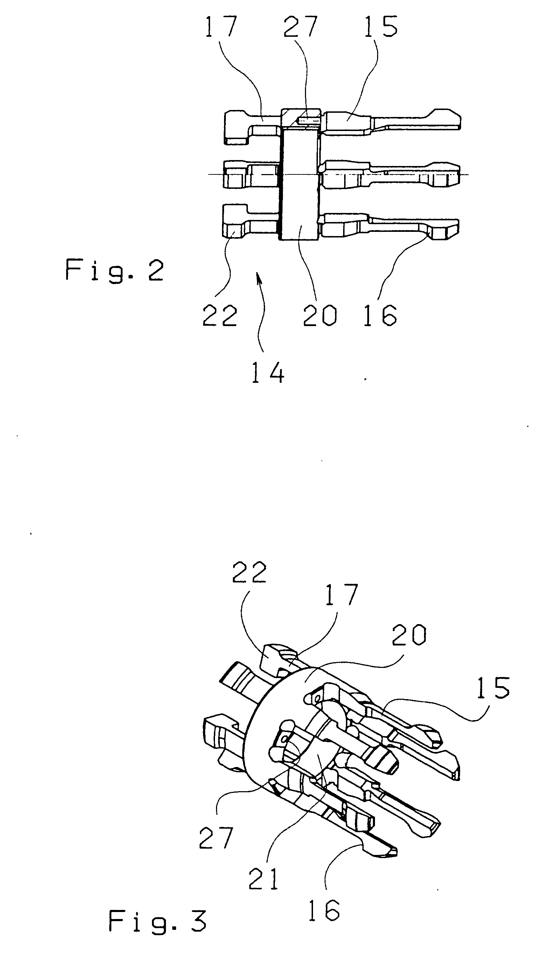

- Fig. 2: eine Seitenansicht der isolierten Haltezange, teilweise geschnitten dargestellt,
- Fig. 3: eine perspektivische Darstellung der isolierten Haltezange,

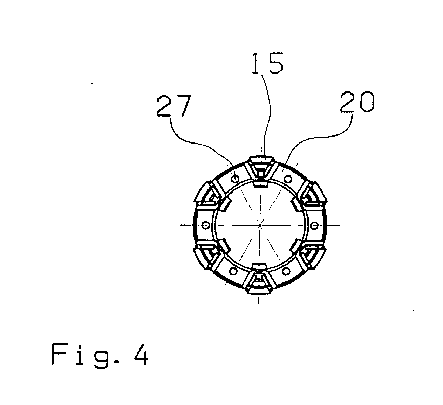

- Fig. 4: eine Vorderansicht der isolierten Haltezange,

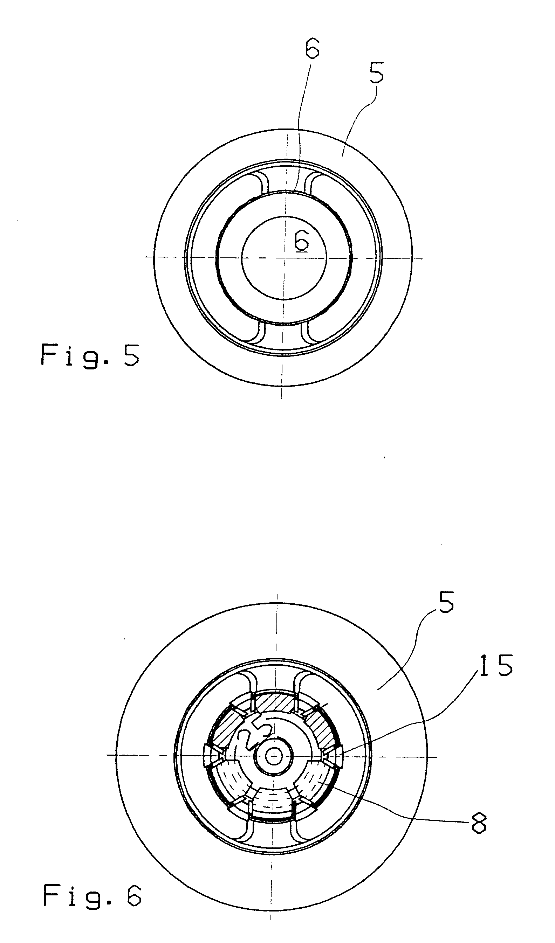

- Fig. 5: eine Vorderansicht der Arbeitsspindel mit der Spindelbohrung,
- Fig. 6: eine Vorderansicht auf das freie Ende der Spannvorrichtung mit den Spannklauen, ohne das Werkzeug,
- Fig. 7: einen Längsschnitt durch das einen Steilkegel haltende axiale Ende einer Spannvorrichtung, oben in der Spannstellung, unten in der Lösestellung gezeigt,
- Fig. 8: eine der Fig. 7 entsprechende Darstellung einer Spannvorrichtung, oben in der Spannstellung, unten in der Stellung zur Montage bzw. Demontage gezeigt, und

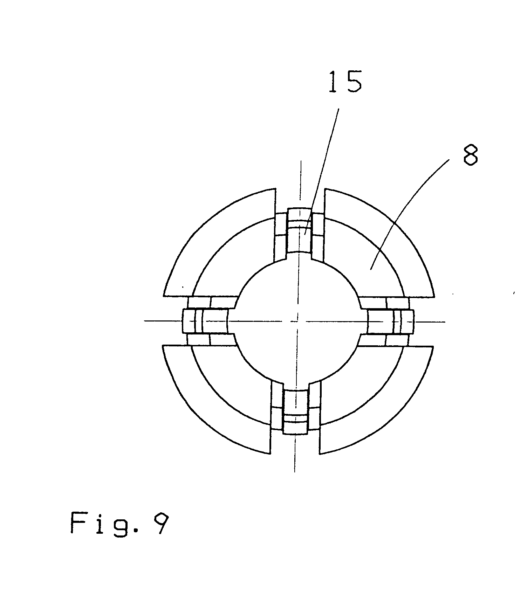

- Fig. 9: eine Vorderansicht der Haltezange mit den Spannklauen aus Fig. 7.

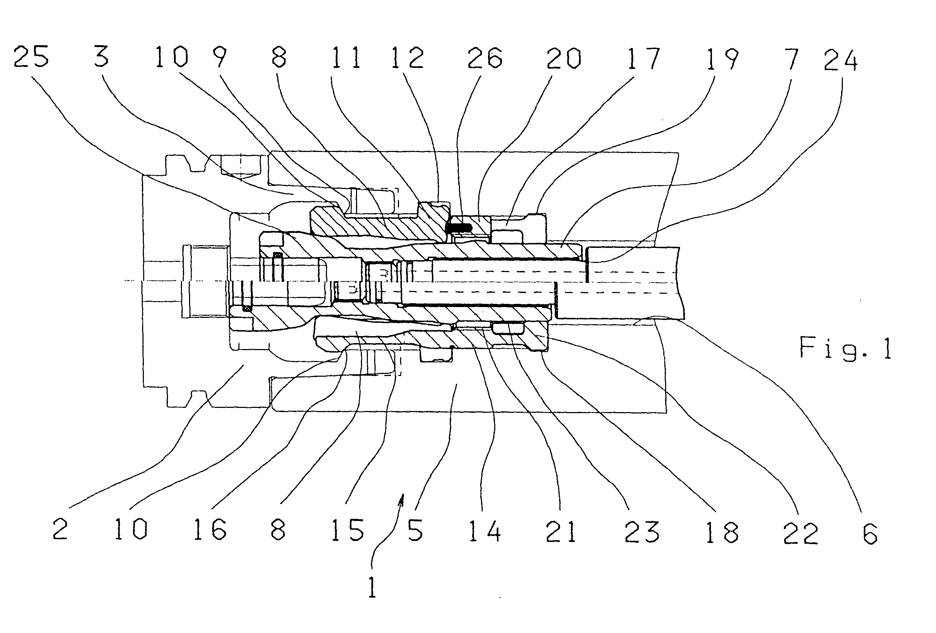

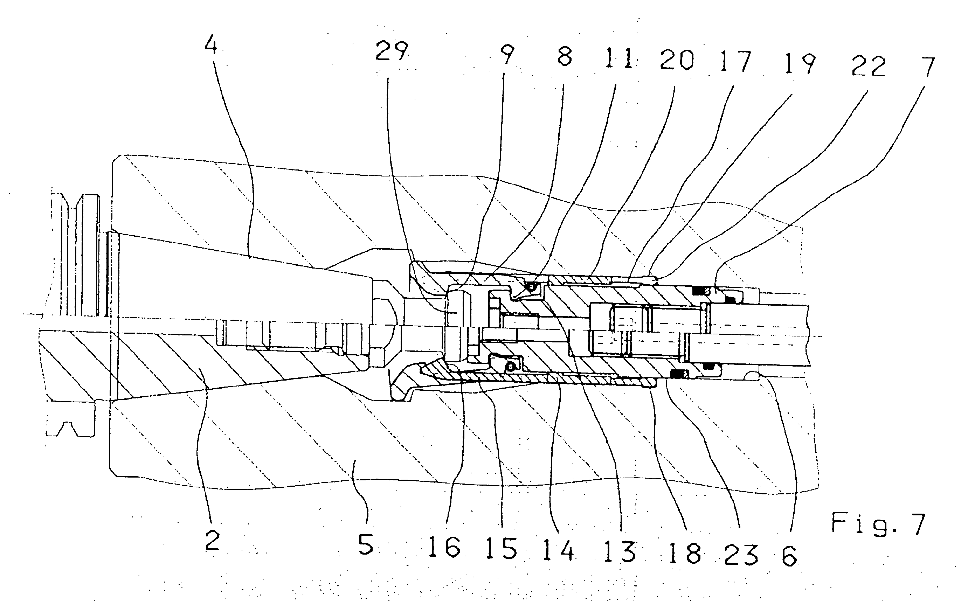

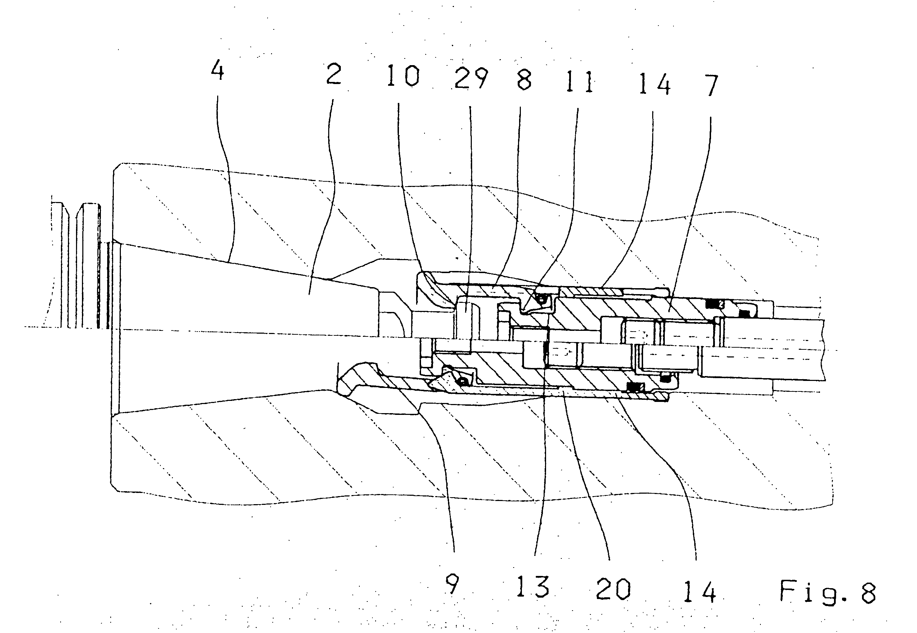

In den Fig. 1, 7 und 8 ist von einer Spannvorrichtung 1 das die Erfindung betreffende axiale Ende gezeigt, das dem zu spannenden Werkzeug 2 zugewandt ist, nämlich in der Fig. 1 einem Hohlschaftkegel 3 und in den Fig. 7 und 8 einem Steilkegel 4 mit einem Einzugsbolzen 27. Der übrige in der Zeichnung nicht dargestellte Aufbau in weiterer axialer Erstreckung der Spannvorrichtung 1 entspricht einer aus dem Stand der Technik bekannten und beispielsweise in der DE 41 38 974 A1 erläuterten Konstruktion, so daß sich diesbezüglich weitere Erläuterungen erübrigen.

Die Spannvorrichtung 1 umfaßt eine Arbeitsspindel 5 mit einer axial verlaufenden Spindelbohrung 6, in der eine Spannstange 7 axial verschieblich geführt ist. In der Spindelbohrung 6 sind weiterhin Spannklauen 8 angeordnet, an denen Klauenflächen 9 ausgebildet sind, die zur Zusammenwirkung mit den Spannflächen 10 des Werkzeugs 2 vorgesehen sind. Bei dem in Fig. 1 dargestellten Ausführungsbeispiel sind die Spannklauen 8 mittels Klauenfüße 11 in eine in Umfangsrichtung der Spindelbohrung 6 verlaufende Spannnut 12 eingesetzt, während in dem in den Fig. 7 und 8 gezeigten Ausführungsbeispiel die Klauenfüße 11 der Spannklauen 8 in eine der Spannstange 7 zugeordnete Spannnut 13 eingreifen. Durch eine in axialer Richtung erfolgende Verstellung der Spannstange 7 können die Klauenflächen 9 gegen die Spannflächen 10 des Werkzeuges 2 gepreßt werden, um so das Werkzeug 2 zu spannen. Dazu erfolgt die axiale Verstellung der Spannstange 7 in die von dem Werkstück 2 abgewandte Richtung, während zum Lösen der Einspannung die Bewegungsrichtung der Spannstange 7 umgekehrt wird.

In der Arbeitsspindel 5 ist weiterhin eine Haltezange 14 angeordnet, an der sich parallel zu den Spannklauen 8 erstreckende, in radialer Richtung federnde Haltezungen 15 ausgebildet sind, die in ihrer Ruhestellung mit Halteflächen 16 den Spannflächen 10 des in die Spannvorrichtung 1 eingesetzten Werkstückes 2 anliegen. Diese Haltezange 14 weist weiterhin auf der den Haltezungen 15 axial abgewandten Seite der Haltezange 14 radial federnde Befestigungssegmente 17 auf, die in eine in der Spindelbohrung 6 der Arbeitsspindel 5 ausgebildete Aufnahme 18 eingreifen, die durch eine in Umfangsrichtung der Spindelbohrung 6 der Arbeitsspindel 5 verlaufende Ringnut 19 gebildet ist.

Die Haltezange 14 besitzt einen Ringbund 20, von dem sich in axial entgegengesetzter Richtungen die Haltezungen 15 und die Befestigungssegmente 17 erstrecken, wobei bei einer Haltevorrichtung für einen Hohlschaftkegel auf der Innenseite des Ringbundes 20 ein Abzugsgewinde 21 ausgebildet ist. Die Befestigungssegmente 17 weisen an ihren freien Enden sich radial aufweitende Segmentköpfe 22 auf, die in die Ringnut 19 eintreten und mit radial innenliegenden Flächen einer Führungsfläche 23 der Spannstange 7 anliegen, wodurch die Segmentköpfe 22 und damit die Befestigungssegmente 17 in der Spindelbohrung 6 gesichert sind. Die Spannstange 7 weist an ihrem freien Ende ein die die Spannklauen 8 beaufschlagendes Druckstück 25 auf, das durch eine Gewindeverbindung 24 von dem Rest der Spannstange 7 getrennt werden kann. Die Haltezungen 15 sind gleichmäßig über den Umfang der Haltezange 14 verteilt, wobei bei einer Haltevorrichtung für einen Hohlschaftkegel zwischen den Haltezungen 15 auf der den Spannklauen 8 zugewandten Seite zur Anlage an den Spannklauen 8 bestimmte elastische Druckstücke 26 angeordnet, nämlich in Bohrungen 27 gehalten sind (Fig.1).

Anhand der Fig. 1 soll nunmehr die Montage und Demontage der Haltezange 14 in der Spindelbohrung 6 der Arbeitsspindel 5 erläutert werden. Zur Montage wird lediglich die Haltezange 14 in die Spindelbohrung 6 eingeschoben, bis die Segmentköpfe 22 in die Ringnut 19 eintreten. Die Spannklauen 8 werden dann einzeln oder auch mit Hilfe einer Haltevorrichtung komplett in die Spindelbohrung 6 mit ihren Klauenfüße 11 in die Spannnut 12 eingesetzt, wodurch die elastischen Druckstücke 26 verformt werden, die dadurch die Klauenfüße 11 gegen die den elastischen Druckstücken 26 gegenüberliegende Wandung der Spannnut 12 pressen. Daraufhin wird dann das Druckstück 25 der Spannstange 7 eingeschoben und mit der Spannstange 7 verschraubt, wodurch auch die Führungsfläche 23 der Spannstange 7 an den Segmentköpfen 22 zur Anlage kommt und diese in der Ringnut 19 sichert. Zur Demontage der Haltezange 14 muß lediglich das Druckstück 25 von der Spannstange 7 wieder gelöst werden, wodurch es dann möglich ist, die Spannklauen 8 zu entfernen und in das Abzuggewinde 21 des Ringbundes 20 der Haltezange 14 einen Abzieher hineinzuschrauben, mit dem die Haltezange 14 dann axial aus der Spindelbohrung 6 entfernt werden kann.

## Patentansprüche

1. Spannvorrichtung für ein Werkzeug (2), Werkstück oder dergl., an dem eine zumindest eine radiale Komponente aufweisende Spannfläche (10) ausgebildet ist, mit einer axial verschieblichen, in der Arbeitsspindel (5) geführten Spannstange (7), durch die in der Arbeitsspindel (5) angeordnete Spannklauen (8) zwischen einer Spannstellung, in der die Spannklauen (8) an der Spannfläche (10) anliegen, und einer Lösestellung verstellbar sind, und mit einer in der Arbeitsspindel (5) angeordneten Haltezange (14), an der sich parallel zu den Spannklauen (8) erstreckende, in radialer Richtung federnde Haltezungen (15) ausgebildet sind mit in der Ruhestellung der Haltezungen (15) der Spannfläche (10) anliegenden Halteflächen (16), **dadurch gekennzeichnet, daß** auf der den Haltezungen (15) axial abgewandten Seite der Haltezange (14) radial federnde Befestigungssegmente (17) angeordnet sind, die in eine in der Spindelbohrung (6) der Arbeitsspindel (5) ausgebildete Aufnahme (18) eingreifen.

2. Spannvorrichtung nach Anspruch 1, **dadurch gekennzeichnet, daß** die Haltezange (14) einen Ringbund (20) aufweist, von dem sich in axial entgegengesetzte Richtungen die Haltezungen (15) und die Befestigungssegmente (17) erstrecken.

3. Spannvorrichtung nach Anspruch 1 oder 2, **dadurch gekennzeichnet, daß** die Aufnahme (18) durch eine in Umfangsrichtung in der Spindelbohrung (6) der Arbeitsspindel (5) verlaufende Ringnut (19) gebildet ist.

4. Spannvorrichtung nach einem der Ansprüche 1 bis 3, **dadurch gekennzeichnet, daß** an den Befestigungssegmenten (17) an deren freien Enden sich radial aufweitende Segmentköpfe (22) ausgebildet sind.

5. Spannvorrichtung nach einem der Ansprüche 1 bis 4, **dadurch gekennzeichnet, daß** an der Spannstange (7) eine Führungsfläche (23) zur Sicherung der in die Aufnahme (18) eingesetzten Befestigungssegmente (17) ausgebildet ist.

6. Spannvorrichtung nach einem der Ansprüche 1 bis 5, **dadurch gekennzeichnet, daß** die Spannstange (7) an ihrem freien Ende über eine Gewindeverbindung (24) mit einem Druckstück (25) verbunden ist, das zur Zusammenwirkung mit den zur Spannung eines Hohlschaftkegels (3) mit einer die Spannfläche (10) aufweisenden Hohlschaftaufnahme ausgebildeten Spannklauen (8) vorgesehen ist.

7. Spannvorrichtung nach Anspruch 6, **dadurch gekennzeichnet, daß** die Spannklauen (8) mit einem Klauenfuß (11) in eine Spannnut (12) der Arbeitsspindel (5) eingesetzt, und daß in dem Ringbund (20) auf der den Spannklauen (8) zugewandten Seite zur Anlage an den Spannklauen (8) bestimmte elastische Druckstücke (26) angeordnet sind.

8. Spannvorrichtung nach einem der Ansprüche 1 bis 5, **dadurch gekennzeichnet, daß** die Spannklauen (8) mit einem Klauenfuß (11) in eine Spannnut (13) der Spannstange (7) eingesetzt und zur Zusammenwirkung mit dem die Spannfläche (10) aufweisenden Spannbund eines Einzugsbolzens (29) eines Steilkegels (4) ausgebildet sind.

9. Spannvorrichtung nach einem der Ansprüche 2 bis 8, **dadurch gekennzeichnet, daß** am Ringbund (20) auf deren Innenseite ein Abzugsgewinde (21) ausgebildet ist.
